# EUROPÄISCHE PATENTSCHRIFT

(11) **EP 3 895 257 B1**
(45) Veröffentlichungstag und Bekanntmachung des Hinweises auf die Patenterteilung: **21.10.2026**
(21) Anmeldenummer: 19828222.0
(22) Anmeldetag: 04.12.2019
(51) Int. Cl.: B60L 3/00, B60L 53/16, G01K 1/16, H01R 13/66

(54) **STECKVERBINDERTEIL MIT EINER TEMPERATURÜBERWACHUNGSEINRICHTUNG**
PLUG CONNECTOR PART COMPRISING A TEMPERATURE-MONITORING DEVICE
PARTIE DE CONNECTEUR À ENFICHAGE COMPRENANT UN DISPOSITIF DE SURVEILLANCE DE LA TEMPÉRATURE

(30) Priorität: 10.12.2018 DE 102018131558
(43) Veröffentlichungstag der Anmeldung: 20.10.2021
(73) Patentinhaber: Phoenix Contact e-Mobility GmbH, 32816 Schieder-Schwalenberg (DE)
(72) Erfinder: FÜHRER, Thomas, 32825 Blomberg (DE); BABEZKI, Robert, 32839 Steinheim (DE)
(74) Vertreter: Meyer-Graefe, Karsten
(86) Internationale Anmeldenummer: PCT/EP2019/083578
(87) Internationale Veröffentlichungsnummer: WO 2020/120239

(56) Entgegenhaltungen:
- EP-A1- 3 644 456
- CN-A- 105 938 958
- CN-U- 203 300 906
- CN-U- 208 171 458
- DE-A1- 102016 107 401
- JP-A- 2009 043 509
- US-A1- 2016 104 978
- US-A1- 2018 048 090

## Beschreibung

Die Erfindung betrifft ein Steckverbinderteil zum steckenden Verbinden mit einem Gegensteckverbinderteil nach dem Oberbegriff des Anspruchs 1.

Ein derartiges Steckverbinderteil umfasst ein steckend mit einem Gegensteckverbinderteil zu verbindendes, elektrisches Kontaktelement und eine Temperaturüberwachungseinrichtung mit einer Sensoreinrichtung zum Detektieren einer Erwärmung an dem Kontaktelement, wobei die Temperaturüberwachungseinrichtung ein aus einem elektrisch isolierenden Material gefertigtes, an dem Kontaktelement angeordnetes Wärmeleitelement auf, wobei das elektrisch isolierende Material eine Kunststoffmatrix und darin eingebettete thermisch leitfähige Partikel aufweist. Die Sensoreinrichtung ist an einem Wärmeleitelement verbundenen Trägerelement angeordnet. Das Wärmeleitelement weist eine Aufnahmekammer auf, die durch eine in das Wärmeleitelement eingeformte Kammerwandung begrenzt ist und die Sensoreinrichtung zumindest teilweise umschließt.

Ein entsprechendes Steckverbinderteil ist beispielsweise aus der EP 3 644 456 A1 und der CN 208 171 458 U bekannt. Weitere Steckverbinderteile sind beispielsweise aus der US 2016/104978 A1, CN 203 300 906 U, JP 2009-043509 A, CN 105 938 958 A und US 2018/048090 A1 bekannt.

Bei einem solchen Steckverbinderteil kann es sich um einen Stecker oder auch eine Buchse handeln. Ein solches Steckverbinderteil kann insbesondere an einer Ladeeinrichtung zum Übertragen eines Ladestroms zum Einsatz kommen. Das Steckverbinderteil kann insbesondere als Ladestecker oder Ladebuchse zum Laden eines elektromotorisch angetriebenen Kraftfahrzeugs (bezeichnet auch als Elektrofahrzeug) ausgebildet sein und kann auf Seiten einer Ladestation, z.B. als Ladestecker an einem Ladekabel, oder auch auf Seiten eines Fahrzeugs als sogenanntes Inlet verwendet werden.

Ladestecker oder Ladebuchsen zum Aufladen von Elektrofahrzeugen sind so auszulegen, dass große Ladeströme übertragen werden können. Weil die thermische Verlustleistung quadratisch mit dem Ladestrom wächst und zudem vorgeschrieben ist, dass eine Temperaturerhöhung an einem Steckverbinderteil 50 K nicht überschreiten darf, ist bei solchen Ladesteckern oder Ladebuchsen erforderlich, eine Temperaturüberwachung bereitzustellen, um eine Überhitzung an Bauteilen des Ladesteckers oder der Ladebuchse frühzeitig zu erkennen und gegebenenfalls eine Modifizierung des Ladestroms oder gar eine Abschaltung der Ladeeinrichtung zu bewirken.

Bei einem aus der EP 2 605 339 A1 bekannten Ladestecker ist ein Temperatursensor an einem Isolierkörper in etwa mittig zwischen Kontaktelementen des Kontaktsteckers angeordnet. Über den Temperatursensor kann erkannt werden, ob irgendwo an den Kontaktelementen es zu einer übermäßigen Erhitzung kommt, um gegebenenfalls ein Abschalten des Ladevorgangs zu bewirken.

Bei einem aus der GB 2 489 988 A bekannten Ladestecker sind mehrere Temperatursensoren vorgesehen, die über eine Leitung Temperaturdaten übermitteln. Abhängig davon, in welchem Temperaturbereich sich die an den Temperatursensoren aufgenommenen Temperaturen befinden, erfolgt eine Regelung eines Ladevorgangs.

Aus der US 6,210,036 B1 ist ein Steckverbinder bekannt, bei dem mehrere Temperatursensoren über eine einadrige Leitung miteinander seriell verkettet sind. Die Temperatursensoren sind an einem Isolierkörper angeordnet und weisen bei einer vorbestimmten Temperatur eine signifikante Widerstandsänderung auf, die so groß ist, dass ein an die Leitung angeschlossener Steuerkreis die Änderung erfassen und den Stromfluss durch den Ladestecker anpassen, gegebenenfalls abschalten kann.

Aus der US 8,325,454 B2 ist ein Stecker bekannt, bei dem einzelnen Kontakten Thermistoren zugeordnet sind, die parallel miteinander verschaltet sind und bei Überschreiten einer Schwelltemperatur einen Thyristor leitend schalten, um auf diese Weise einen Stromfluss durch die Kontakte abzuschalten.

Bei aus dem Stand der Technik bekannten Ladesteckern sind Temperatursensoren zum Beispiel in einen Isolierkörper eingebettet. Dies ist erforderlich, um die Temperatursensoren elektrisch von den Kontaktelementen, an denen es zu einer Erwärmung kommen kann, zu isolieren. Dies bringt aber gleichzeitig den Nachteil mit sich, dass eine Temperaturänderung an einem der Kontaktelemente über den Isolierkörper zeitlich verzögert übertragen wird und somit mit zeitlicher Verzögerung an den Temperatursensoren wahrgenommen wird. Insbesondere bei Konzepten, die eine Schnellabschaltung eines Lastkreises im Fehlerfall ermöglichen sollen, sind derartige Anordnungen von Temperatursensoren daher unter Umständen ungeeignet.

Es besteht ein Bedürfnis nach einer Temperaturüberwachungseinrichtung, die einfach und kostengünstig aufgebaut sein kann und eine Temperaturüberwachung an den Kontaktelementen mit einem schnellen Ansprechverhalten für ein zügiges Einleiten von Gegenmaßnahmen, beispielsweise eine Schnellabschaltung eines Ladestroms, ermöglicht.

Bei einem aus der DE 10 2015 106 251 A1 bekannten Steckverbinderteil sind Kontaktelemente in Öffnungen einer Leiterplatte angeordnet. An der Leiterplatte sind ein oder mehrere Sensoreinrichtungen vorgesehen, die dazu dienen, eine Erwärmung an einem oder mehreren Kontaktelementen zu erfassen.

Bei der Wärmeleitung ist jedoch zu beachten, dass insbesondere bei Verwendung im Rahmen eines Ladesystems an einem Steckverbinderteil nicht nur große Stromstärken, sondern auch große Spannungen, beispielsweise bis hin zu 1000 V, auftreten können. Werden elektrisch leitende Elemente zur Wärmeleitung eingesetzt, muss somit sichergestellt sein, dass dadurch die elektrische Isolation einer Temperaturüberwachungseinrichtung von den elektrischen Kontaktelementen gewährleistet ist und insbesondere auch vorgegebene Luft- oder Kriechstrecken eingehalten werden.

Aufgabe der vorliegenden Erfindung ist es, ein Steckverbinderteil bereitzustellen, das auf einfache und kostengünstige Weise eine Temperaturüberwachung mit schnellem Ansprechverhalten und einfachem Aufbau bei guter elektrischer Isolation der Temperaturüberwachungseinrichtung von einem zugeordneten Kontaktelement ermöglicht.

Diese Aufgabe wird durch einen Gegenstand mit den Merkmalen des Anspruchs 1 gelöst.

Demnach ist die Sensoreinrichtung zumindest von Teilen der Kammerwandung beabstandet und das Wärmeleitelement weist einen Isolationsabschnitt auf, der zwischen dem Trägerelement und dem Kontaktelement angeordnet ist und dadurch das Trägerelement elektrisch von dem Kontaktelement isoliert, wobei der Isolationsabschnitt sich bis hin zu einer der Sensoreinrichtung abgewandten Seite des Trägerelements erstreckt und das Trägerelement an der der Sensoreinrichtung abgewandten Seite umgreift Dies geht davon aus, ein Wärmeleitelement zu verwenden, das aus einem elektrisch isolierenden Material, insbesondere einem Kunststoffmaterial und/oder Keramikmaterial, gefertigt ist. Das Wärmeleitelement ist gut leitfähig für Wärme, wirkt aber elektrisch isolierend. Hierzu können beispielsweise technische Kunststoffe zum Einsatz kommen, denen zum Beispiel Additive beigemengt sind, zum Beispiel ein mineralisches Additiv auf Graphitbasis, das aus kristallinem Kohlenstoff besteht (z.B. ein modifiziertes Graphit). Auch andere Additive in Partikelform, zum Beispiel Metallteilchen oder Keramikteilchen (zum Beispiel Bornitrid-Teilchen), können in eine Kunststoffmatrix eingebettet sein, wobei der Füllgrad so bemessen ist, dass trotz Beimengung der Kunststoff elektrisch isolierend wirkt und eine hinreichende Spannungsfestigkeit aufweist. Die Grundmatrix des mit Additiven modifizierten Kunststoffs kann hierbei beispielsweise ein Polymer, zum Beispiel ein thermoplastischer Kunststoff, zum Beispiel Polycarbonat, sein.

Das Wärmeleitelement ist somit zum einen gut wärmeleitfähig, zum anderen aber elektrisch isolierend. Dies ermöglicht, die Sensoreinrichtung der Temperaturüberwachungseinrichtung räumlich getrennt von dem Kontaktelement anzuordnen und Wärme von dem Kontaktelement über das Wärmeleitelement hin zu der Sensoreinrichtung zu leiten, sodass die Temperaturüberwachungseinrichtung ein schnelles Ansprechverhalten bei Erhitzung an dem Kontaktelement aufweisen kann. Aufgrund der räumlichen Trennung der Sensoreinrichtung von dem zugeordneten Kontaktelement und der elektrischen Isolation über das Wärmeleitelement werden hierbei Luft- und Kriechstrecken auch bei großen an dem Kontaktelement anliegenden Spannungen eingehalten.

Das Wärmeleitelement ist vorzugsweise unmittelbar in Kontakt mit dem zugeordneten Kontaktelement. Über das Wärmeleitelement wird somit Wärme an dem Kontaktelement aufgenommen und hin zu der Sensoreinrichtung der Temperaturüberwachungseinrichtung geleitet.

Erfindungsgemäß weist das Wärmeleitelement eine Aufnahmekammer auf, die durch eine in das Wärmeleitelement eingeformte Kammerwandung begrenzt ist und die Sensoreinrichtung zumindest teilweise umschließt. Die Sensoreinrichtung ist hierbei zumindest von Teilen der Kammerwandung beabstandet.

Dadurch, dass die Sensoreinrichtung mit Abstand zu dem Wärmeleitelement in der Aufnahmekammer angeordnet ist, wird die Sensoreinrichtung mechanisch und elektrisch von dem Wärmeleitelement entkoppelt. Dadurch, dass die Sensoreinrichtung in der Aufnahmekammer eingefasst ist, kann die Sensoreinrichtung hierbei eine an dem Wärmeleitelement bestehende Temperatur schnell (ohne große zeitliche Verzögerung) aufnehmen und zum Beispiel einer übergeordneten Steuereinrichtung zum Zwecke der Auswertung zuleiten.

Möglich ist aber auch, dass die Sensoreinrichtung das Wärmeleitelement berührt. Weil das Wärmeleitelement elektrisch isolierend ist, ist die Sensoreinrichtung über das Wärmeleitelement elektrisch von dem zugeordneten Kontaktelement getrennt.

Aufgrund der Wärmeleitung über das Wärmeleitelement und die Anordnung der Sensoreinrichtung in der Aufnahmekammer kann somit ein schnelles Ansprechverhalten erreicht werden, um eine zuverlässige Temperaturüberwachung an dem Steckverbinderteil zur Verfügung zu stellen.

Das Wärmeleitelement kann beispielsweise einen Körper aufweisen, der einen Flächenabschnitt ausbildet, in den die Aufnahmekammer eingeformt ist. In der Aufnahmekammer liegt die Sensoreinrichtung ein und ist zumindest teilweise von dem Wärmeleitelement umschlossen, sodass eine Temperatur des Wärmeleitelements effizient von der Sensoreinrichtung aufgenommen werden kann.

Der Körper kann beispielsweise eine Öffnung aufweisen, durch die das Kontaktelement hindurch erstreckt ist. Der Körper umgibt somit das zugeordnete Kontaktelement umfänglich. Dabei liegt das Wärmeleitelement eng an dem Kontaktelement an und kann eine Erwärmung an dem Kontaktelement unmittelbar aufnehmen und der Sensoreinrichtung zuleiten.

Die Aufnahmekammer kann beispielsweise, betrachtet entlang einer Erstreckungsebene des Flächenabschnitts, als in alle Raumrichtungen geschlossene Vertiefung oder als zumindest in eine Raumrichtung offene Nut geformt sein. Ist die Aufnahmekammer in der Ebene des Flächenabschnitts geschlossen, so umgibt das Wärmeleitelement die Sensoreinrichtung in der Ebene des Flächenabschnitts umfänglich, sodass die Sensoreinrichtung umfänglich vom Wärmeleitelement eingefasst ist. Ist die Aufnahmekammer als einseitig oder zweiseitig offene Nut geformt, so ist die Aufnahmekammer in der Erstreckungsebene des Flächenabschnitts zu einer oder zwei Seiten hin offen, was die Montage der Sensoreinrichtung an dem Wärmeleitelement gegebenenfalls erleichtern kann.

In einer Ausgestaltung weist der Körper einen zumindest teilweise um die Öffnung herum erstreckten Schaftabschnitt und einen radial zu dem Schaftabschnitt vorstehenden Ringbund auf. Der Körper ist somit nach Art einer Buchse ausgebildet, mit einem länglich erstreckten Schaftabschnitt, der das Kontaktelement zum Beispiel an einem zylindrischen Abschnitt umfänglich umgibt oder im Querschnitt als Kreissegment ausgebildet ist und somit den zylindrischen Abschnitt des Kontaktelements umfänglich teilweise einfasst. Der Schaftabschnitt des Körpers kann beispielsweise eine hohlzylindrische Form aufweisen. Über den Schaftabschnitt ist das Wärmeleitelement in Anlage mit dem Kontaktelement und kann somit in effizienter Weise Wärme an dem Kontaktelement aufnehmen.

In einer Ausgestaltung ist die Aufnahmekammer, in der die Sensoreinrichtung angeordnet ist, an einem Abschnitt des Ringbunds geformt. Der Ringbund steht axial gegenüber dem Schaftabschnitt nach außen hin vor, wobei die Aufnahmekammer an einem radial äußeren Abschnitt des Ringbunds geformt sein kann. Die Aufnahmekammer - somit der Ort, an dem die Sensoreinrichtung angeordnet ist - ist somit räumlich getrennt von dem Kontaktelement.

In einer Ausgestaltung weist das Wärmeleitelement einen Wärmebrückenabschnitt auf, der den Schaftabschnitt und den Ringbund an einem Umfangsort miteinander verbindet, an dem die Aufnahmekammer an dem Ringbund angeordnet ist. Der Wärmebrückenabschnitt dient dazu, Wärme von dem Schaftabschnitt hin zu dem Ringbund und insbesondere dem Ort, an dem die Sensoreinrichtung angeordnet ist, zu leiten. Der Wärmebrückenabschnitt ist hierzu massiv ausgestaltet und kann sich beispielsweise schräg zwischen dem Schaftabschnitt und dem Ringbund des Körpers des Wärmeleitelements erstrecken.

Erfindungsgemäß ist die Sensoreinrichtung an einem Trägerelement, beispielsweise einer Leiterplatte angeordnet. An dem Trägerelement können weitere Funktionskomponenten angeordnet sein, zum Beispiel weitere elektrische oder elektronische Bauteile, zum Beispiel zur Ausbildung einer Steuereinrichtung. An dem Trägerelement, insbesondere bei Ausgestaltung als Leiterplatte, können beispielsweise auch elektrische Leiterbahnen geformt sein, über die die Sensoreinrichtung elektrisch mit übergeordneten Baugruppen, insbesondere einer Steuereinrichtung, verbunden ist.

Beispielsweise können an dem Trägerelement auch mehrere Sensoreinrichtungen angeordnet sein. Insbesondere kann vorteilhaft sein, jedem Kontaktelement des Steckverbinderteils, über das im Betrieb Lastströme übertragen werden, eine eigene Sensoreinrichtung zuzuordnen, sodass an jedem Kontaktelement gesondert überwacht werden kann, ob sich das Kontaktelement (übermäßig) erhitzt.

Das Trägerelement ist erfindungsgemäß mit dem Wärmeleitelement verbunden. Eine solche Verbindung kann in einer einfachen Anlage des Wärmeleitelements an dem Trägerelement bestehen. Denkbar und möglich ist aber auch, dass das Wärmeleitelement zum Beispiel drehfest zu dem Trägerelement festgelegt ist, sodass das Wärmeleitelement in seiner Drehstellung gesichert ist. Hierzu kann beispielsweise ein Fixierungselement zum Einsatz kommen, zum Beispiel in Form eines Stifts, der zum Beispiel eine Stecköffnung des Trägerelements durchgreift und in eine zugeordnete Stecköffnung des Wärmeleitelements eingreift, um dadurch das Wärmeleitelement drehfest zu dem Trägerelement zu arretieren.

Die Aufnahmekammer ist beispielsweise an einer Seite des Trägerelements angeordnet, die einem Flächenabschnitt des Wärmeleitelements zugewandt ist. In den Flächenabschnitt ist die Aufnahmekammer derart eingeformt, dass die Sensoreinrichtung in der Aufnahmekammer einliegt, ohne dabei aber die Kammerwandungen der Aufnahmekammer zu berühren.

Über den Flächenabschnitt kann das Wärmeleitelement in flächiger Anlage mit dem Trägerelement sein, sodass über das Wärmeleitelement auch Wärme in das Trägerelement eingeleitet und dieses somit mit erwärmt wird, was vorteilhaft sein kann, um das Ansprechverhalten der Temperaturüberwachungseinrichtung zu verbessern und insbesondere eine Trägheit im Ansprechen aufgrund eines Temperaturunterschieds zwischen dem Trägerelement und dem Wärmeleitelement zumindest zu reduzieren.

Erfindungsgemäß weist das Wärmeleitelement einen Isolationsabschnitt auf, der zwischen dem Trägerelement und dem Kontaktelement angeordnet ist. Der Isolationsabschnitt kann beispielsweise an dem Körper des Wärmeleitelements derart geformt sein, dass das Trägerelement über den Isolationsabschnitt von dem Kontaktelement getrennt und somit elektrisch von dem Kontaktelement isoliert ist. Ein Spannungsdurchschlag von dem Kontaktelement auf das Trägerelement kann auf diese Weise verhindert werden.

Der Isolationsabschnitt erstreckt sich hierbei hin zu einer der Sensoreinrichtung abgewandten Seite des Trägerelements und umgreift dabei das Trägerelement an der der Sensoreinrichtung abgewandten Seite n. Über den Isolationsabschnitt wird somit auch eine (flächige) Verbindung zwischen dem Wärmeleitelement und dem Trägerelement hergestellt, sodass (auch) über den Isolationsabschnitt Wärme in das Trägerelement eingeleitet und dieses mit erwärmt wird, was das Ansprechverhalten der Temperaturüberwachungseinrichtung weiter verbessern kann.

In einer Ausgestaltung weist das Steckverbinderteil zusätzlich ein Gehäuseteil und einen Kontaktträger auf. Das Wärmeleitelement steht hierbei in Verbindung mit dem Kontaktträger, wobei über den Kontaktträger das Kontaktelement zu dem Gehäuseteil festgelegt ist. Vorteilhafterweise steht das Wärmeleitelement hierbei unmittelbar in Verbindung mit dem Kontaktelement, beispielsweise indem das Kontaktelement eine zugeordnete Öffnung des Wärmeleitelements durchgreift. Das Wärmeleitelement ist hierbei wiederum mit dem Kontaktträger verbunden, sodass über den Kontaktträger das Kontaktelement relativ zu dem Gehäuseteil des Steckverbinderteils befestigt ist.

Beispielsweise kann der Kontaktträger eine Öffnung aufweisen, in die das Wärmeleitelement eingreift. Der Kontaktträger ist somit selbst nicht unmittelbar mit dem Kontaktelement verbunden, sondern lediglich mittelbar über das Wärmeleitelement. Dadurch, dass das Wärmeleitelement in die Öffnung des Kontaktträgers eingreift, ist auch das Kontaktelement zu dem Kontaktträger festgelegt und über den Kontaktträger zu dem Gehäuseteil des Steckverbinderteils befestigt.

An dem Kontaktträger können hierbei ein oder mehrere Kontaktelemente, insbesondere ein oder mehrere Kontaktelemente zum Übertragen von Lastströmen, zum Beispiel eines Ladestroms in Form eines Gleichstroms, angeordnet und zu dem Gehäuseteil festgelegt sein.

Das Steckverbinderteil kann beispielsweise als Ladestecker oder als Ladebuchse eines Ladesystems zum Aufladen eines Elektrofahrzeugs Verwendung finden. Das Steckverbinderteil weist hierzu Kontaktelemente auf, die als Lastkontakte zum Übertragen eines Ladestroms zum Beispiel in Form eines Gleichstroms oder in Form eines Wechselstroms dienen. Eine Temperaturüberwachungseinrichtung ist vorzugsweise an solchen Lastkontakten angeordnet, wobei in einer vorteilhaften Ausgestaltung jedem Kontaktelement eine eigene Sensoreinrichtung zugeordnet ist. Die Sensoreinrichtung ist beispielsweise an eine Steuereinrichtung angeschlossen, sodass über die Temperaturüberwachungseinrichtung aufgenommene Signale ausgewertet und zum Steuern eines über die Lastkontakte übertragenen Ladestroms verwendet werden können.

Sensoreinrichtungen der hier beschriebenen Art können z.B. als Temperatursensoren beispielsweise in Form von temperaturabhängigen Widerständen ausgebildet sein. Bei solchen Temperatursensoren kann es sich beispielsweise um Widerstände mit einem positiven Temperaturkoeffizienten (sogenannte PTC-Widerstände) handeln, deren Widerstandswert mit steigender Temperatur ansteigt (auch bezeichnet als Kaltleiter, die bei niedriger Temperatur eine gute elektrische Leitfähigkeit und bei höheren Temperaturen eine reduzierte elektrische Leitfähigkeit aufweisen). Solche Temperatursensoren können beispielsweise auch eine nichtlineare Temperaturkennlinie aufweisen und können beispielsweise aus einem Keramikmaterial hergestellt sein (sogenannte Keramik-Kaltleiter).

Es können beispielsweise aber auch elektrische Widerstände mit negativem Temperaturkoeffizienten (sogenannte NTC-Widerstände) als Temperatursensoren zum Einsatz kommen, deren Widerstandswert mit steigender Temperatur sinkt.

Alternativ oder zusätzlich können auch durch Halbleiterbauelemente ausgebildete Temperatursensoren zum Einsatz kommen.

Der der Erfindung zugrunde liegende Gedanke soll nachfolgend anhand der in den Figuren dargestellten Ausführungsbeispiele näher erläutert werden. Es zeigen:
- Fig.1: eine schematische Darstellung eines Elektrofahrzeugs mit einem Ladekabel und einer Ladestation zum Aufladen;
- Fig. 2: eine Ansicht eines Steckverbinderteils in Form eines Inlets auf Seiten eines Fahrzeugs;
- Fig. 3: eine Ansicht zweier Kontaktelementen eines Steckverbinderteils mit einem Kontaktträger und einer Temperaturüberwachungseinrichtung;
- Fig. 4: eine Explosionsdarstellung der Ansicht gemäß Fig. 3;
- Fig. 5: eine Schnittansicht entlang der Schnittebene A gemäß Fig. 3;
- Fig. 6: eine ausschnittsweise vergrößerte Darstellung der Anordnung gemäß Fig. 5;
- Fig. 7: eine gesonderte Ansicht eines Wärmeleitelemente der Temperaturüberwachungseinrichtung;
- Fig. 8: eine andere Ansicht des Wärmeleitelements;
- Fig. 9: eine wiederum andere Ansicht des Wärmeleitelements;
- Fig. 10: eine Ansicht von Kontaktelementen des Steckverbinderteils zusammen mit einem Kontaktträger nach einem anderen Ausführungsbeispiel einer Temperaturüberwachungseinrichtung;
- Fig. 11: eine Teilexplosionsdarstellung der Anordnung gemäß Fig. 10;
- Fig. 12: eine Schnittansicht entlang der Linie B-B gemäß Fig. 10;
- Fig. 13: eine ausschnittsweise vergrößerte Ansicht der Anordnung gemäß Fig. 12;
- Fig. 14: eine Schnittansicht entlang der Linie A-A gemäß Fig. 10;
- Fig. 15: eine ausschnittsweise vergrößerte Ansicht der Anordnung gemäß Fig. 14;
- Fig. 16: eine gesonderte Ansicht eines Wärmeleitelements des Ausführungsbeispiels gemäß Fig. 10;
- Fig. 17: eine andere Ansicht des Wärmeleitelements;
- Fig. 18: eine wiederum andere Ansicht des Wärmeleitelements; und
- Fig. 19: eine Seitenansicht des Wärmeleitelements.

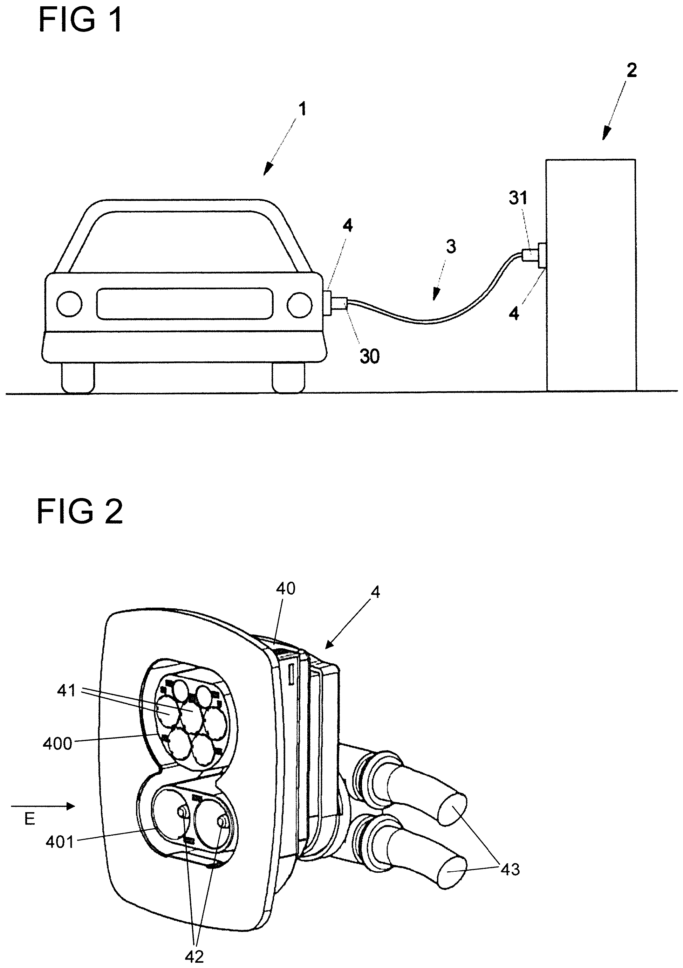

Fig. 1 zeigt in einer schematischen Ansicht ein Fahrzeug 1 in Form eines elektromotorisch angetriebenen Fahrzeugs (bezeichnet auch als Elektrofahrzeug). Das Elektrofahrzeug 1 verfügt über elektrisch aufladbare Batterien, über die ein Elektromotor zum Fortbewegen des Fahrzeugs 1 elektrisch versorgt werden kann.

Um die Batterien des Fahrzeugs 1 aufzuladen, kann das Fahrzeug 1 über ein Ladekabel 3 an eine Ladestation 2 angeschlossen werden. Das Ladekabel 3 kann hierzu mit einem Ladestecker 30 an einem Ende in ein zugeordnetes Gegensteckverbinderteil 4 in Form einer Ladebuchse des Fahrzeugs 1 eingesteckt werden und steht an seinem anderen Ende über einen anderen Ladestecker 31 mit einem Steckverbinderteil 4 in Form einer Ladebuchse an der Ladestation 2 in elektrischer Verbindung. Über das Ladekabel 3 werden Ladeströme mit vergleichsweise großer Stromstärke hin zum Fahrzeug 1 übertragen.

Das Steckverbinderteil 4 aufseiten des Fahrzeugs 1 und das Steckverbinderteil 4 aufseiten der Ladestation 2 können sich unterscheiden. Möglich ist auch, das Ladekabel 3 fest an der Ladestation 2 (ohne Steckverbinderteil 4) anzuordnen.

Fig. 2 zeigt ein Ausführungsbeispiel eines Steckverbinderteils 4 in Form einer Ladebuchse zum Beispiel auf Seiten eines Fahrzeugs (auch bezeichnet als Fahrzeuginlet), das steckend mit einem zugeordneten Gegensteckverbinderteil 30 in Form eines Ladesteckers an einem Ladekabel 3 verbunden werden kann, um das Elektrofahrzeug 1 mit der Ladestation 2 des Ladesystems zu verbinden. Das Steckverbinderteil 4 weist ein Gehäuseteil 40 auf, an dem Steckabschnitte 400, 401 geformt sind, mit denen das Steckverbinderteil 30 entlang einer Steckrichtung E steckend verbunden werden kann. An den Steckabschnitten 400, 401 sind Stecköffnungen gebildet, in denen Kontaktelemente 41, 42 angeordnet sind, über die bei steckendem Verbinden eine elektrische Verbindung zu dem zugeordneten Gegensteckverbinderteil 30 hergestellt werden kann.

Bei dem dargestellten Ausführungsbeispiel sind an einem ersten, oberen Steckabschnitt 400 Kontaktelemente 41 angeordnet, über die zum Beispiel ein Ladestrom in Form eines Wechselstroms übertragen werden kann. Zusätzlich können Kontaktelemente vorhanden sein, über die Steuersignale übertragen werden können.

An einem zweiten, unteren Steckabschnitt 401 sind demgegenüber zwei Kontaktelemente 42 angeordnet, über die ein Ladestrom in Form eines Gleichstroms übertragen werden kann. Die Kontaktelemente 42 sind mit Lastleitungen 43 verbunden, über die der Ladestrom geleitet wird.

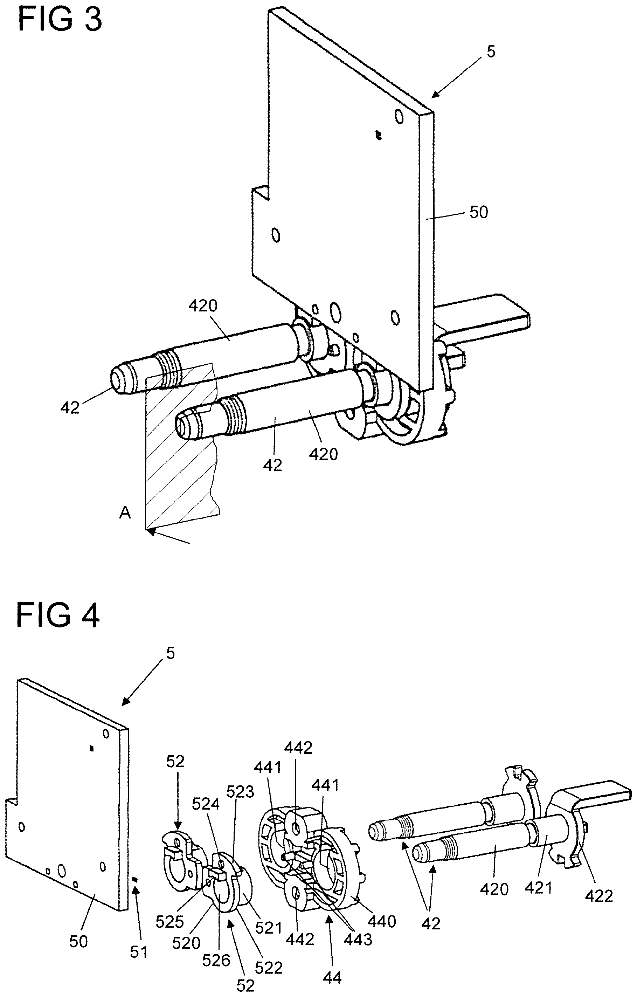

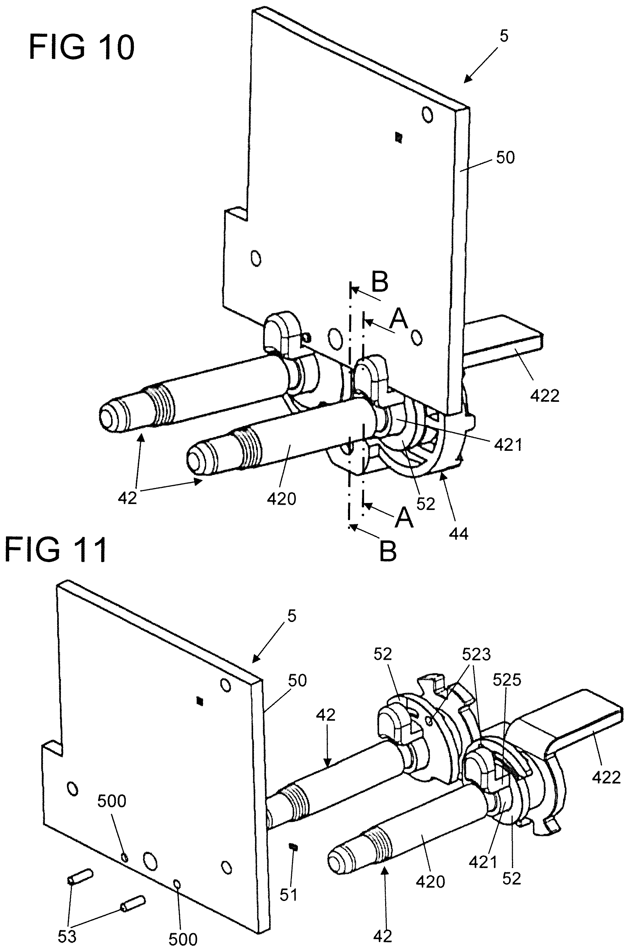

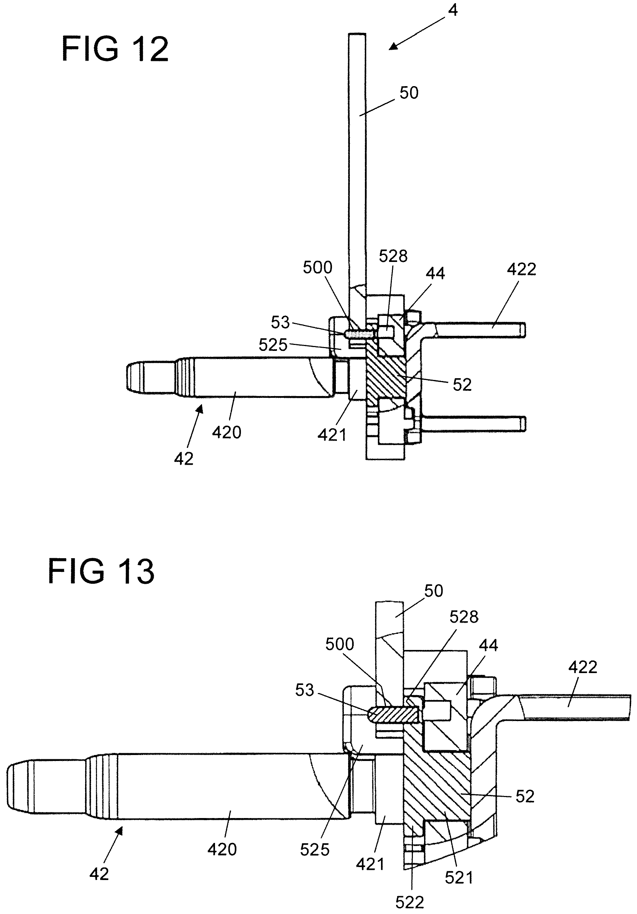

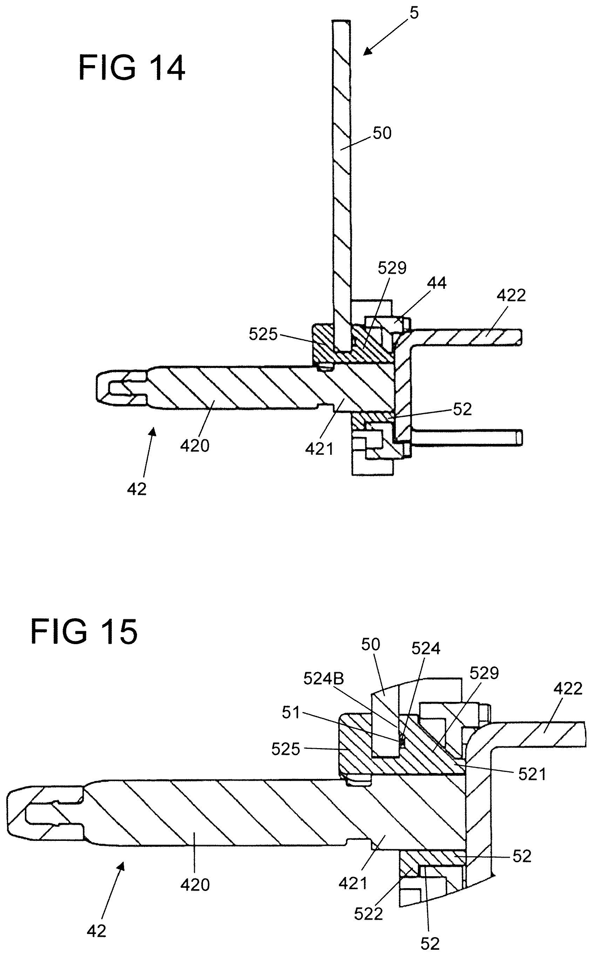

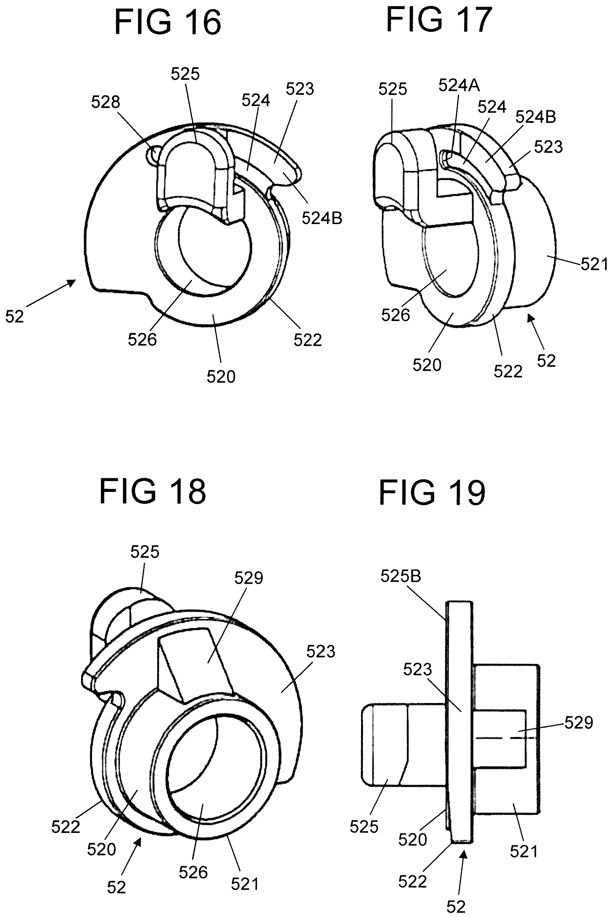

Im Betrieb kommt es bei Übertragen eines Ladestroms zu einer Erwärmung an den Kontaktelementen 41, 42, wobei insbesondere über die Kontaktelemente 42 zum Übertragen eines Ladestroms in Form eines Gleichstroms Ströme großer Stromstärke fließen können, beispielsweise bis hin zu 500 A. Um eine übermäßige Erwärmung an dem Steckverbinderteil 4 auszuschließen und gegebenenfalls Maßnahmen einzuleiten, um einer übermäßigen Erwärmung entgegenzuwirken, ist ein Temperaturanstieg an den Kontaktelementen 42 zu überwachen, wozu an dem Steckverbinderteil 4, wie nachfolgend anhand der Ausführungsbeispiele gemäß Fig. 3 bis 9 und gemäß Fig. 10 bis 19 erläutert werden soll, eine Temperaturüberwachungseinrichtung 5 mit Sensoreinrichtungen 51 in Form von Temperatursensoren vorgesehen ist.

Ein erstes Ausführungsbeispiel einer Temperaturüberwachungseinrichtung 5 zeigen Fig. 3 bis 9. Bei diesem Ausführungsbeispiel sind an einem Trägerelement 50 in Form einer Leiterplatte zwei Sensoreinrichtungen 51 in Form von Temperatursensoren angeordnet, um an den Kontaktelementen 42 gegebenenfalls eine Erwärmung zu detektieren. Jedem Kontaktelement 42 ist hierbei eine (gesonderte) Sensoreinrichtung 51 zugeordnet. An dem Trägerelement 50 können zusätzlich elektrische oder elektronische Komponenten angeordnet sein, insbesondere eine Steuereinrichtung, der Sensorsignale der Sensoreinrichtungen 51 zugeleitet werden, um die Sensorsignale auszuwerten und gegebenenfalls einen Ladevorgang in Abhängigkeit der Sensorsignale zu steuern.

Die Temperaturüberwachungseinrichtung 5 weist zwei Wärmeleitelemente 52 auf, die jeweils einen Körper 520 mit einer darin geformten Öffnung 526 aufweisen. Ein jedes Wärmeleitelement 52 ist an einem zugeordneten Kontaktelement 42 angeordnet derart, dass das zugeordnete Kontaktelement 42 mit einem zylindrischen Abschnitt 421, der an einen in den Steckabschnitt 401 hineinragenden Stiftabschnitt 420 anschließt, die Öffnung 526 durchgreift und das Wärmeleitelement 52 somit unter flächiger Anlage auf dem zugeordneten Kontaktelement 42 sitzt.

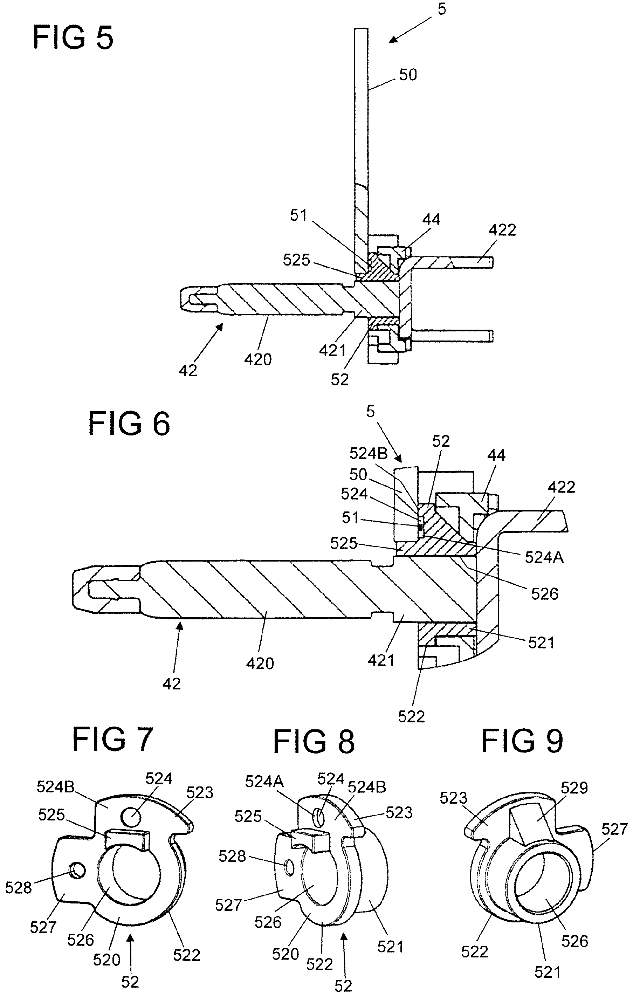

Wie zum Beispiel aus Fig. 4 in Zusammenschau mit Fig. 7 bis 9 ersichtlich, weist jedes Wärmeleitelement 52 einen hohlzylindrischen Schaftabschnitt 521 auf, mit dem das Wärmeleitelement 52 das zugeordnete Kontaktelement 42 umgreift. Von dem Schaftabschnitt 521 steht radial eine Ringbund 522 vor, der bei dem dargestellten Ausführungsbeispiel nach außen überstehende Abschnitte 523, 524 ausbildet, die einerseits in flächiger Anlage mit dem Trägerelement 50 und andererseits mit einem Kontaktträger 44 sind.

Das Wärmeleitelement 52 ist aus einem elektrisch isolierenden, aber gut wärmeleitenden Material ausgebildet, insbesondere einem Kunststoffmaterial, dass zum Beispiel Additive zum Bewirken einer guten Wärmeleitfähigkeit aufweist. Das Wärmeleitelement 52 dient hierbei dazu, Wärme von dem zugeordneten Kontaktelement 42 aufzunehmen und hin zu der zugeordneten Sensoreinrichtung 51 an dem Trägerelement 50 zu leiten derart, dass die Sensoreinrichtung 51 mit schnellem Ansprechverhalten eine Erwärmung an dem Kontaktelement 42 detektieren kann.

An einem Flächenabschnitt 524B, mit dem der Abschnitt 523 des Ringbunds 522 an dem Trägerelement 50 anliegt, ist eine Aufnahmekammer 524 gebildet, in der die zugeordnete Sensoreinrichtung 51 einliegt, wie dies insbesondere aus Zusammenschau von Fig. 5 und 6 ersichtlich ist. Die Aufnahmekammer 524 ist als Vertiefung in den Flächenabschnitt 524B eingeformt und wird durch Kammerwandungen 524A begrenzt und definiert.

Dadurch, dass die Sensoreinrichtung 51 von dem Wärmeleitelement 52 im Bereich der Aufnahmekammer 524 eingefasst ist, kann die Sensoreinrichtung 51 über das Wärmeleitelement 52 geleitete Wärme zügig aufnehmen und entsprechende Sensorsignale abgeben. Die Sensoreinrichtung 51 ist hierbei räumlich zum Beispiel derart beabstandet zu den Kammerwandungen 524A, dass die Sensoreinrichtung 51 nicht in Berührung mit den Kammerwandungen 524A steht, kann die Kammerwandungen 524A aber gegebenenfalls auch berühren.

Über den Flächenabschnitt 524B ist der Abschnitt 523 in Anlage mit dem Trägerelement 50. Der Flächenabschnitt 523 des Ringbunds 522 ist hierbei über einen massiven Wärmebrückenabschnitt 529, der sich schräg zwischen dem Schaftabschnitt 521 und dem Abschnitt 523 erstreckt (siehe Fig. 9), mit dem Schaftabschnitt 521 verbunden, sodass Wärme in effizienter Weise hin zu dem Abschnitt 523 und der darin geformten Aufnahmekammer 524 geleitet werden kann.

An dem Flächenabschnitt 524B ist zudem ein Isolationsabschnitt 525 geformt, der axial von dem Flächenabschnitt 524B hin zu einer dem Schaftabschnitt 521 abgewandten Seite vorsteht. Der Isolationsabschnitt 525 ist zwischen dem Trägerelement 50 und dem zylindrischen Abschnitt 421 des Kontaktelements 42 angeordnet und stellt eine Isolation zwischen dem Trägerelement 50 und dem Kontaktelement 42 her, die eine hinreichende Spannungsfestigkeit auch bei großen Spannungen (zum Beispiel bis hin zu 1000 V) gewährleistet.

An einem weiteren von dem Ringbund 522 vorstehenden Abschnitt 527 ist eine Stecköffnung 528 geformt, die mit einem zugeordneten Zapfenelement 443 des Kontaktträgers 44 (siehe Fig. 4) in Eingriff steht, sodass das Wärmeleitelement 52 drehfest gegenüber dem Kontaktträger 44 festgelegt ist.

Der Kontaktträger 44 dient dazu, die Kontaktelemente 42 zu dem Gehäuseteil 40 festzulegen und mechanisch zu halten. Der Kontaktträger 44 weist zwei Öffnungen 441 auf, in die jeweils ein Wärmeleitelement 52 mit einem Schaftabschnitt 521 eingreift, sodass über das jeweilige Wärmeleitelement 52 ein jedes Kontaktelement 42 an dem Kontaktträger 44 festgelegt ist. Über Befestigungsstellen 442 kann der Kontaktträger 44 zu dem Gehäuseteil 40 festgelegt und somit in dem Steckverbinderteil 4 befestigt werden.

Rückseitig der Kontaktelemente 42 sind Verbindungselemente 422 angeordnet, über die Lastleitungen 43 an die Kontaktelemente 42 angeschlossen sind.

Das in Fig. 10 bis 19 dargestellte Ausführungsbeispiel unterscheidet sich von dem vorangehend anhand von Fig. 3 bis 9 geschilderten Ausführungsbeispiel im Wesentlichen anhand der Form der Wärmeleitelemente 52.

Bei dem Ausführungsbeispiel gemäß Fig. 10 bis 19 weisen die Wärmeleitelemente 52 wiederum jeweils einen Körper 520 auf, der einen Schaftabschnitt 521 und einen radial zu dem Schaftabschnitt 521 vorstehenden Ringbund 522 ausbildet. In einer zentralen Öffnung 526 des Wärmeleitelements 52 liegt ein zugeordnetes Kontaktelement 42 mit einem zylindrischen Abschnitt 421 ein, sodass das Wärmeleitelement 52 auf dem zugeordneten Kontaktelement 42 sitzt und in flächiger Anlage mit dem zylindrischen Abschnitten 421 ist.

An einem an dem Ringbund 522 geformten Abschnitt 523 ist eine Aufnahmekammer 524 in Form einer nutförmigen Vertiefung ausgebildet, in der die zugeordnete Sensoreinrichtung 51 der Temperaturüberwachungseinrichtung 5 einliegt. Die Aufnahmekammer 524 ist gekrümmt ausgebildet - mit einem Krümmungsradius, der dem radialen Abstand zur zentralen Achse des zugeordneten Kontaktelements 42 entspricht - und einseitig offen, was es ermöglicht, die Sensoreinrichtung 51 durch Verdrehen des Wärmeleitelements 52 um das zugeordnete Kontaktelement 42 in die Aufnahmekammer 524 einzuschieben. Wiederum liegt in montierter Stellung die Sensoreinrichtung 51 derart in der Aufnahmekammer 524 ein, dass die Sensoreinrichtung 51 nicht in Berührung mit den die Aufnahmekammer 524 definierenden Kammerwandungen 524A ist.

Die Aufnahmekammer 524 ist in einen Flächenabschnitt 524B des Abschnitts 523 eingeformt, der dem Trägerelement 50, an dem die Sensoreinrichtung 51 angeordnet ist, zugewandt ist. Von diesem Flächenabschnitt 524B steht ein Isolationsabschnitt 525 axial vor und erstreckt sich hierbei derart hin zu der dem Flächenabschnitt 524B abgewandten Seite des Trägerelements 50, dass der Isolationsabschnitt 525 das Trägerelement 50 umgreift und somit eine beidseitige Anlage des Wärmeleitelements 52 an dem Trägerelement 50 bewirkt. Hierdurch wird erreicht, dass - zusätzlich zu einer guten elektrischen Isolation des Trägerelements 50 von dem Kontaktelement 42 - Wärme großflächig in das Trägerelement 50 eingeleitet wird, sodass das Trägerelement 50 mit erwärmt wird und somit eine Wärmedifferenz zwischen dem Trägerelement 50 und dem Wärmeleitelement 52 im Bereich der Sensoreinrichtung 51 nicht zu einer Beeinträchtigung des Ansprechverhaltens der Sensoreinrichtung 51 an dem Trägerelement 50 führt.

Bei dem Ausführungsbeispiel gemäß Fig. 10 bis 19 erfolgt eine drehfeste Arretierung der Wärmeleitelemente 52 gegenüber dem Trägerelement 50 dadurch, dass Fixierungselemente 53 in Form von Stiften (siehe Fig. 11) durch Stecköffnungen 500 im Trägerelement 50 hindurch in Stecköffnungen 528 an den Abschnitten 523 der Wärmeleitelemente 52 eingreifen und dadurch die Wärmeleitelemente 52 gegenüber dem Trägerelement 50 arretieren.

Zur Montage des Steckverbinderteils 4 können die Wärmeleitelemente 52 zusammen mit dem Kontaktträger 44 an die Kontaktelemente 42 angesetzt werden, um auf diese Weise eine Kontaktbaugruppe zu schaffen, die in dem Gehäuseteil 40 des Steckverbinderteils 4 montiert werden kann. Die Verbindung der Wärmeleitelemente 52 mit dem Trägerelement 50 und den an dem Trägerelement 50 angeordneten Sensoreinrichtungen 51 erfolgt dann nach Einsetzen der Kontaktbaugruppe in das Gehäuseteil 40 durch Verdrehen der Wärmeleitelemente 52 an den Kontaktelementen 42. Ist durch Verdrehen der Wärmeleitelemente 52 die jeweilige Sensoreinrichtung 51 in Eingriff mit der zugeordneten Aufnahmekammer 524 und dadurch auch der Isolationsabschnitt 525 in Umgriff mit dem Trägerelement 50 gebracht worden, werden die Wärmeleitelemente 52 über die Fixierungselemente 53 gegenüber dem Trägerelement 50 fixiert und dadurch drehfest zu dem Trägerelement 50 und somit auch zu dem Gehäuseteil 40 festgelegt.

Ansonsten ist das Ausführungsbeispiel gemäß Fig. 10 bis 19 funktional identisch dem Ausführungsbeispiel gemäß Fig. 3 bis 9, sodass auch auf die vorangehenden Ausführungen und Erläuterungen verwiesen werden soll.

Der der Erfindung zugrunde liegende Gedanke ist nicht auf die vorangehend geschilderten Ausführungsbeispiele beschränkt, sondern lässt sich grundsätzlich auch in gänzlich andersgearteter Weise verwirklichen.

Ein Steckverbinderteil der hier beschriebenen Art kann vorteilhaft in einem Ladesystem zum Aufladen eines Elektrofahrzeugs verwendet werden. Das Steckverbinderteil kann hierbei eine Ladebuchse (wie bei den dargestellten Ausführungsbeispielen) oder auch einen Ladestecker verwirklichen.

Denkbar ist aber auch eine andere Verwendung. Grundsätzlich ist ein Steckverbinderteil der beschriebenen Art überall dort einsetzen, wo eine Temperaturüberwachung an Kontaktelementen wünschenswert ist.

### Bezugszeichenliste

- 1: Fahrzeug
- 2: Ladestation
- 3: Ladekabel
- 30, 31: Ladestecker
- 4: Steckverbinderteil
- 40: Gehäuseteil
- 400, 401: Steckabschnitt
- 41, 42: Kontaktelement
- 420: Stiftabschnitt
- 421: Zylindrischer Abschnitt
- 422: Verbindungselement
- 43: Lastleitungen
- 44: Kontaktträger
- 440: Körper
- 441: Öffnung
- 442: Befestigungsstelle
- 443: Zapfenelement
- 5: Temperaturüberwachungseinrichtung
- 50: Trägerelement (Leiterplatte)
- 500: Stecköffnung
- 51: Temperatursensor
- 52: Wärmeleitelement
- 520: Körper
- 521: Schaftabschnitt
- 522: Ringbund
- 523: Abschnitt
- 524: Aufnahmekammer
- 524A: Kammerwandung
- 524B: Flächenabschnitt
- 525: Isolationsabschnitt
- 526: Öffnung
- 527: Abschnitt
- 528: Stecköffnung
- 529: Wärmebrückenabschnitt
- 53: Fixierungselement
- A: Schnittebene
- E: Steckrichtung

## Patentansprüche

1. Steckverbinderteil (4) zum steckenden Verbinden mit einem zugeordneten Gegensteckverbinderteil (30, 31), mit einem steckend mit dem Gegensteckverbinderteil (30, 31) zu verbindenden, elektrischen Kontaktelement (42) und einer Temperaturüberwachungseinrichtung (5) mit einer Sensoreinrichtung (51) zum Detektieren einer Erwärmung an dem Kontaktelement (42), wobei die Temperaturüberwachungseinrichtung (5) ein aus einem elektrisch isolierenden Material gefertigtes, an dem Kontaktelement (42) angeordnetes Wärmeleitelement (52) aufweist, wobei das elektrisch isolierende Material eine Kunststoffmatrix und darin eingebettete thermisch leitfähige Partikel aufweist, wobei die Sensoreinrichtung (51) an einem mit dem Wärmeleitelement (52) verbundenen Trägerelement (50) angeordnet ist, wobei das Wärmeleitelement (52) eine Aufnahmekammer (524) aufweist, die durch eine in das Wärmeleitelement (52) eingeformte Kammerwandung (524A) begrenzt ist und die Sensoreinrichtung (51) zumindest teilweise umschließt, **dadurch gekennzeichnet, dass** die Sensoreinrichtung (51) zumindest von Teilen der Kammerwandung (524A) beabstandet ist und dass das Wärmeleitelement (52) einen Isolationsabschnitt (525) aufweist, der zwischen dem Trägerelement (50) und dem Kontaktelement (42) angeordnet ist und dadurch das Trägerelement (50) elektrisch von dem Kontaktelement (42) isoliert, wobei der Isolationsabschnitt (525) sich bis hin zu einer der Sensoreinrichtung (51) abgewandten Seite des Trägerelements (50) erstreckt und das Trägerelement (50) an der der Sensoreinrichtung (51) abgewandten Seite umgreift.

2. Steckverbinderteil (4) nach Anspruch 1, **dadurch gekennzeichnet, dass** das Wärmeleitelement (52) einen Körper (520) aufweist und die Aufnahmekammer (524) als Vertiefung in einen Flächenabschnitt (524B) des Körpers (520) eingeformt ist.

3. Steckverbinderteil (4) nach Anspruch 2, **dadurch gekennzeichnet, dass** der Körper (520) eine Öffnung (526) aufweist, durch die das Kontaktelement (42) hindurch erstreckt ist.

4. Steckverbinderteil (4) nach Anspruch 2 oder 3, **dadurch gekennzeichnet, dass** die Aufnahmekammer (524), betrachtet entlang einer Erstreckungsebene des Flächenabschnitts (524B), als in alle Raumrichtungen geschlossene Vertiefung oder als zumindest in eine Raumrichtung offene Nut geformt ist.

5. Steckverbinderteil (4) nach einem der Ansprüche 2 bis 4, **dadurch gekennzeichnet, dass** der Körper (520) einen zumindest teilweise um die Öffnung (526) umfänglich herum erstreckten Schaftabschnitt (521) und einen radial zu dem Schaftabschnitt (521) vorstehenden Ringbund (522) aufweist.

6. Steckverbinderteil (4) nach Anspruch 5, **dadurch gekennzeichnet, dass** die Aufnahmekammer (524) an einem Abschnitt (523) des Ringbunds (522) geformt ist.

7. Steckverbinderteil (4) nach Anspruch 5 oder 6, **dadurch gekennzeichnet, dass** das Wärmeleitelement (52) einen Wärmebrückenabschnitt (529) aufweist, der den Schaftabschnitt (521) und den Ringbund (522) an einem Umfangsort miteinander verbindet, an dem die Aufnahmekammer (524) an dem Ringbund (522) angeordnet ist.

8. Steckverbinderteil (4) nach Anspruch 7, **dadurch gekennzeichnet, dass** der Wärmebrückenabschnitt (529) schräg zwischen dem Schaftabschnitt (521) und dem Ringbund (522) erstreckt ist.

9. Steckverbinderteil (4) nach einem der Ansprüche 1 bis 8, **dadurch gekennzeichnet, dass** das Wärmeleitelement (52) über ein Fixierungselement (53) drehfest mit dem Trägerelement (50) verbunden ist.

10. Steckverbinderteil (4) nach einem der Ansprüche 1 bis 9, **dadurch gekennzeichnet, dass** die Aufnahmekammer (524) in einen dem Trägerelement (50) zugewandten Flächenabschnitt (524B) des Wärmeleitelements (52) eingeformt ist.

11. Steckverbinderteil (4) nach einem der vorangehenden Ansprüche, **gekennzeichnet durch** ein Gehäuseteil (40) und einen Kontaktträger (44), wobei das Wärmeleitelement (52) an dem Kontaktträger (44) angeordnet und das Kontaktelement (42) über den Kontaktträger (44) zu dem Gehäuseteil (40) festgelegt ist.

12. Steckverbinderteil (4) nach Anspruch 11, **dadurch gekennzeichnet, dass** das Wärmeleitelement (52) eine Öffnung (441) des Kontaktträgers (44) durchgreift.

## Claims

1. Connector part (4) for plug-in connection with an associated mating connector part (30, 31), comprising an electrical contact element (42) configured to be connected in a plug-in manner with the mating connector part (30, 31) and a temperature monitoring device (5) with a sensor device (51) for detecting a heating of the contact element (42), wherein the temperature monitoring device (5) comprises a heat-conducting element (52) which is made of an electrically insulating material and is arranged on the contact element (42), wherein the electrically insulating material comprises a plastics matrix and thermally conductive particles embedded therein, wherein the sensor device (51) is arranged on a carrier element (50) connected to the heat-conducting element (52), wherein the heat-conducting element (52) has a receiving chamber (524) which is delimited by a chamber wall (524A) formed in the heat-conducting element (52) and which at least partially surrounds the sensor device (51), **characterized in that** the sensor device (51) is spaced apart from at least portions of the chamber wall (524A) and **in that** the heat-conducting element (52) comprises an insulation section (525) which is arranged between the carrier element (50) and the contact element (42) and thereby electrically isolates the carrier element (50) from the contact element (42), wherein the insulation section (525) extends up to a side of the carrier element (50) facing away from the sensor device (51) and surrounds the carrier element (50) on the side facing away from the sensor device (51).

2. Connector part (4) according to claim 1, **characterized in that** the heat-conducting element (52) comprises a body (520) and the receiving chamber (524) is formed as a recess in a surface portion (524B) of the body (520).

3. Connector part (4) according to claim 2, **characterized in that** the body (520) comprises an opening (526) through which the contact element (42) extends.

4. Connector part (4) according to claim 2 or 3, **characterized in that** the receiving chamber (524), when considered along an extension plane of the surface section (524B), is formed as a recess closed in all spatial directions or as a groove that is open in at least one spatial direction.

5. Connector part (4) according to any one of claims 2 to 4, **characterized in that** the body (520) comprises a shank portion (521) extending at least partially circumferentially around the opening (526) and an annular collar (522) projecting radially with respect to the shank portion (521).

6. Connector part (4) according to claim 5, **characterized in that** the receiving chamber (524) is formed at a section (523) of the annular collar (522).

7. Connector part (4) according to claim 5 or 6, **characterized in that** the heat-conducting element (52) comprises a thermal bridge section (529) which connects the shaft section (521) and the annular collar (522) to one another at a circumferential position at which the receiving chamber (524) is arranged on the annular collar (522).

8. Connector part (4) according to claim 7, **characterized in that** the thermal bridge section (529) extends obliquely between the shaft section (521) and the annular collar (522).

9. Connector part (4) according to any one of claims 1 to 8, **characterized in that** the heat-conducting element (52) is non-rotatably connected to the carrier element (50) by means of a fixing element (53).

10. Connector part (4) according to any one of claims 1 to 9, **characterized in that** the receiving chamber (524) is formed in a surface portion (524B) of the heat-conducting element (52) facing the carrier element (50).

11. Connector part (4) according to any one of the preceding claims, **characterized in that** it comprises a housing part (40) and a contact carrier (44), wherein the heat-conducting element (52) is arranged on the contact carrier (44) and the contact element (42) is secured to the housing part (40) via the contact carrier (44).

12. Connector part (4) according to claim 11, **characterized in that** the heat-conducting element (52) extends through an opening (441) of the contact carrier (44).

## Revendications

1. Partie de connecteur à enfichage (4) destinée à être raccordée par enfichage à une partie de connecteur à enfichage homologue (30, 31), comprenant un élément de contact électrique (42) destiné à être raccordé par enfichage à la partie de connecteur à enfichage homologue (30, 31) et d'un dispositif de surveillance de la température (5) comportant un dispositif capteur (51) destiné à détecter un échauffement au niveau de l'élément de contact (42), le dispositif de surveillance de la température (5) possédant un élément conducteur de chaleur (52) fabriqué dans un matériau électriquement isolant et disposé sur l'élément de contact (42), le matériau électriquement isolant présentant une matrice en plastique et des particules thermiquement conductrices qui y sont incorporées, le dispositif capteur (51) étant disposé sur un élément porteur (50) relié à l'élément conducteur de chaleur (52), l'élément conducteur de chaleur (52) possédant une chambre de réception (524) qui est délimitée par une paroi de chambre (524A) moulée dans l'élément conducteur de chaleur (52) et qui entoure au moins partiellement le dispositif capteur (51), **caractérisée en ce que** le dispositif capteur (51) est espacé d'au moins certaines parties de la paroi de chambre (524A) et **en ce que** l'élément conducteur de chaleur (52) possède une portion isolante (525) qui est disposée entre l'élément porteur (50) et l'élément de contact (42) et isole ainsi électriquement l'élément porteur (50) de l'élément de contact (42), la portion d'isolation (525) s'étendant jusqu'à un côté de l'élément porteur (50) dirigé à l'opposé du dispositif capteur (51) et entourant l'élément porteur (50) du côté orienté à l'opposé du dispositif capteur (51).

2. Partie de connecteur à enfichage (4) selon la revendication 1, **caractérisée en ce que** l'élément conducteur de chaleur (52) possède un corps (520) et la chambre de réception (524) est réalisée sous la forme d'un creux dans une portion de surface (524B) du corps (520).

3. Partie de connecteur à enfichage (4) selon la revendication 2, **caractérisée en ce que** le corps (520) possède une ouverture (526) à travers laquelle s'étend l'élément de contact (42).

4. Partie de connecteur à enfichage (4) selon la revendication 2 ou 3, **caractérisée en ce que** la chambre de réception (524), vue le long d'un plan d'extension de la portion de surface (524B), est réalisée sous la forme d'un creux fermé dans toutes les directions spatiales ou sous la forme d'une rainure ouverte au moins dans une direction spatiale.

5. Partie de connecteur à enfichage (4) selon l'une des revendications 2 à 4, **caractérisée en ce que** le corps (520) possède une portion de tige (521) qui s'étend au moins partiellement autour du pourtour de l'ouverture (522) et un collet annulaire (526) qui fait saillie radialement par rapport à la portion de tige (521).

6. Partie de connecteur à enfichage (4) selon la revendication 5, **caractérisée en ce que** la chambre de réception (524) est formée au niveau d'une portion (523) du collet annulaire (522).

7. Partie de connecteur à enfichage (4) selon la revendication 5 ou 6, **caractérisée en ce que** l'élément conducteur de chaleur (52) possède une portion de pont thermique (529) qui relie ensemble la portion de tige (521) et le collet annulaire (522) à un emplacement du pourtour au niveau duquel la chambre de réception (524) est disposée sur le collet annulaire (522).

8. Partie de connecteur à enfichage (4) selon la revendication 7, **caractérisée en ce que** la portion de pont thermique (529) s'étend obliquement entre la portion de tige (521) et le collet annulaire (522).

9. Partie de connecteur à enfichage (4) selon l'une des revendications 1 à 8, **caractérisée en ce que** l'élément conducteur de chaleur (52) est relié de manière solidaire en rotation à l'élément porteur (50) par l'intermédiaire d'un élément de calage (53).

10. Partie de connecteur à enfichage (4) selon l'une des revendications 1 à 9, **caractérisée en ce que** la chambre de réception (524) est formée dans une portion de surface (524B) de l'élément conducteur de chaleur (52) qui fait face à l'élément porteur (50).

11. Partie de connecteur à enfichage (4) selon l'une des revendications précédentes, **caractérisée par** une partie de boîtier (40) et un porte-contact (44), l'élément conducteur de chaleur (52) étant disposé sur le porte-contact (40) et l'élément de contact (42) étant fixé par rapport à la partie de boîtier (44) par l'intermédiaire du porte-contact (44).

12. Partie de connecteur à enfichage (4) selon la revendication 11, **caractérisée en ce que** l'élément conducteur de chaleur (52) traverse une ouverture (441) du porte-contact (44).
